# EUROPEAN PATENT APPLICATION

(11) **EP 1 611 985 A1**
(43) Date of publication of application: **04.01.2006**
(21) Application number: 05009963.9
(22) Date of filing: 06.05.2005
(51) Int. Cl.: B23H 7/10

(54) **Funnel-piece serving to route the spent wire in a wire electrical discharge machine**

(30) Priority: 04.06.2004 CH 9442004
(71) Applicant: CHARMILLES TECHNOLOGIES S.A., 1217 Meyrin 1 (CH)
(72) Inventor: Batelaan, Dirk Cornelis, 1212 Grand Lancy (CH); Navarrete, Miguel, 1204 Genève (CH); Terekhov, Konstantin, 1214 Vernier (CH); Grandjean, Michel Marcel Robert, 1242 Satigny (CH)
(74) Representative: Weiss, Wolfgang

(57) **Abstract**

The present invention relates to a funnel-piece serving to route the spent wire (20), intended to replace a piece (520) made up of two cylindrical elements (521, 522) 3 mm and 15 mm long respectively, with respective diameters of 2 and 4 mm, and of a whistle-shaped element (523), the latter comprising a pointed nose (524) associated with two cheeks (525) and two concave rounded portions of radius 20 mm, which is installed downstream of and between the two spent-wire drive rollers (39, 40) in wire electrical discharge machines that employ a device for recovering and cutting the spent wire (30) which chops the wire into small segments after it has passed through the machining zone, characterized in that this piece comprises means for accentuating a flow of liquid in the opposite direction to the direction of rotation of the rollers (39, 40) so as to detach the wire when the latter becomes stuck to one or other of the rollers.

## Description

The present invention relates to the improvement of a funnel-piece that serves to route the spent wire used in wire electrical discharge machines that use a device for recovering and cutting the spent wire which chops the wire into small segments after it has passed through the machining zone. The cutting device placed in the lower head, comprises a cutting wheel and the small segments of wire are removed as waste under the pressure of the machining liquid via a duct (see document EP 1 153 688).

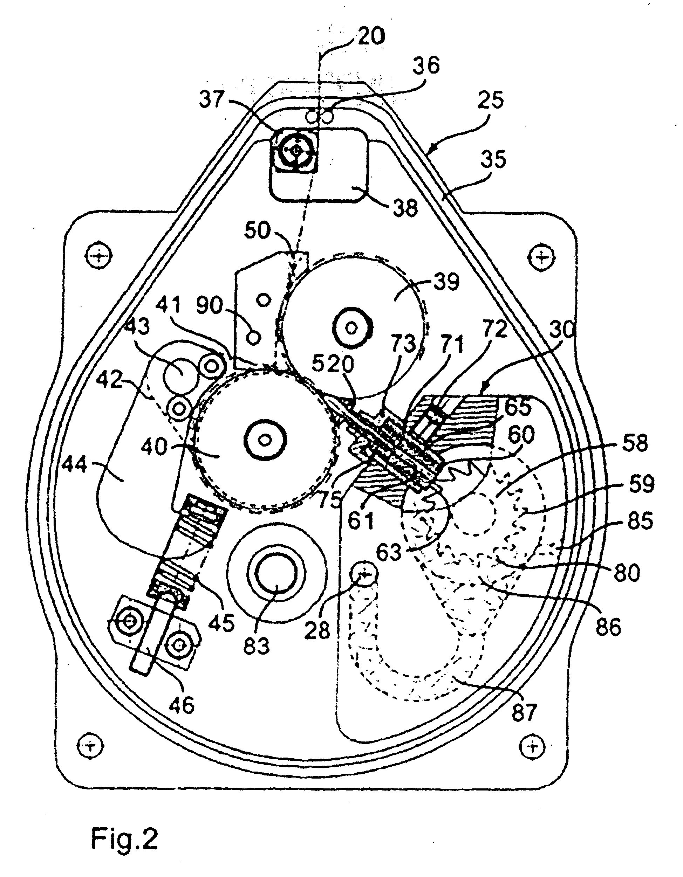

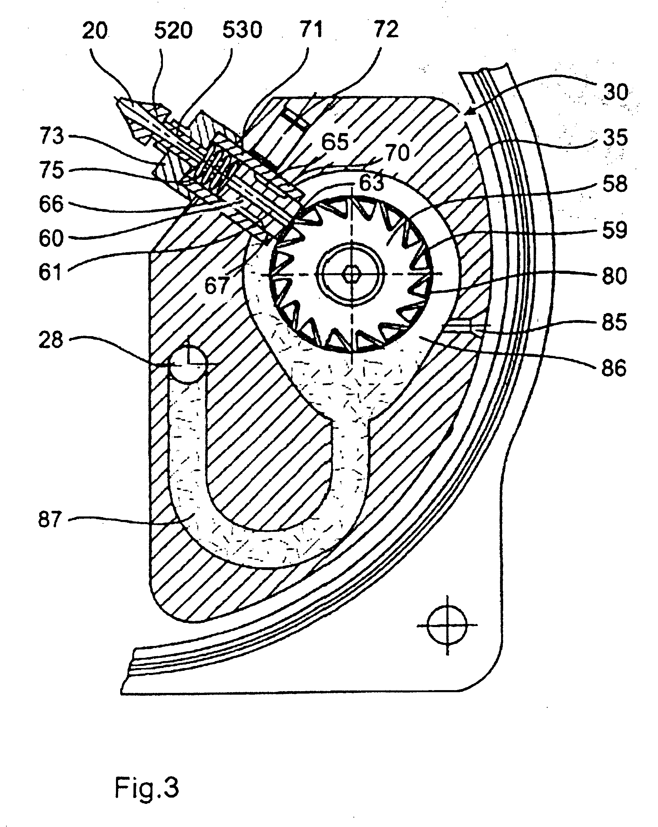

Figure 2 depicts the lower head 25 and the cutting device 30 that it contains. The lower head 25 may be closed by means of a cover, not depicted, which presses against the seal 35. The wire 20 enters the casing at a wire guide 36, passes via an electrical contact 37 mounted on an insulating support 38 in order to finish up in a guide cone 50 that allows precise accommodation of the wire between the two drive rollers 39, 40 which pull it along. The axle of the drive roller 39 is fixed, while the axle of the roller 40 is able to move and is urged with an adjustable predetermined force against the roller 39. This roller 40 for this purpose is mounted on a first arm 41 of a two-arm lever 42, the two arms being articulated on a pivot 43. The second arm 44 of this lever is subjected to the action of a spring 45 the effect of which can be adjusted by means of a screw 46. On leaving the rollers 39, 40 the wire enters the cutting device 30 by virtue of a second guide cone 520 (Figure 3), followed by a guide canal 530.

The entirety of the cutting device 30 is housed in a sealed second chamber, itself housed within the first chamber delimited and closed off by the seal 35. A flow of liquid of 3 to 4 litres/minute at a pressure of 2 bar is injected into the first chamber and re-emerges via the guide cone 520 and the canal 530 towards the second chamber which is at atmospheric pressure.

The flow of liquid passes through the cutting device 30 which comprises a cutting wheel 58 driven in rotation in the anticlockwise direction in Figures 2 and 3 and comprising teeth 59 intended to collaborate with a counter-cutter piece 60 in order to chop the wire into small segments 87, which are removed as waste under the thrust of the liquid through the duct 28.

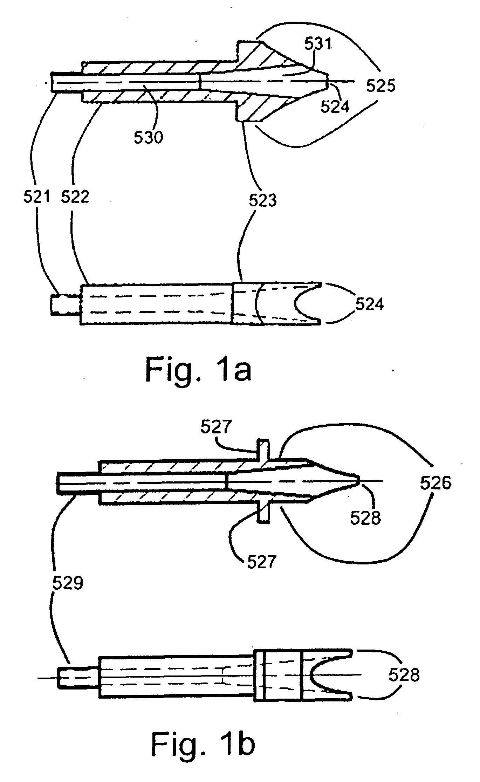

The piece which internally constitutes the guide cone 520 and the canal 530, Figure 1, externally in its original form resembles the mouth of a musical instrument or a whistle because of its being housed in close proximity between the two spent-wire drive rollers 39, 40. On the inside, it is simply an axial bore 520 with a small diameter of 1.6 mm, into which the narrow part of a 10° cone 530 opens; this cone constituting an inlet funnel for recovering the spent wire propelled by the two drive rollers 39, 40.

The full external shape of the same piece 520 in its original form consists of two cylindrical elements 521, 522, 3 mm and 5 mm long respectively, coaxial with the bore 530, and having respective diameters of 2 and 4 mm. The latter cylinder ends in a whistle shape 523 generated from a right-angled parallelepiped 9 mm long, 8 mm wide and 3 mm thick. The final whistle shape 523 of the mouth that receives the wire as it leaves the two drive rollers 39, 40 is generated by subtracting the volume of the two drive rollers, of radius 19.95 mm, plus a clearance of 0.05 mm when the piece is imagined in its definitive position. This yields a pointed nose 524 associated with two cheeks 525.

However, as explained hereinbelow, the presence of these two cheeks 525 leads to a major problem of reliability to which the present invention affords a solution.

The end of the nose 524 can be brought up close to the generatrix of contact between the two drive rollers 39, 40 to facilitate the capture of the wire. The cylindrical part 522 is introduced without clearance into the bore of a support 73 attached to the cutting device 30. The shoulder formed by the cheeks 525 makes it possible precisely to adjust the position of the piece 520 with respect to the support 73 so as finally to obtain the optimum distance between the rounded part of the cheeks 525 and the rollers 39, 40. The cylindrical part 521 acts as a pivot for the counter-cutter piece 60 pressed against the teeth 59 of the cutter 58 by the spring 75.

Because they become worn, the counter-cutter piece 60 has to be replaced every 500 operating hours and the cutter 58 every 1000 hours. All of the associated pieces therefore have to be removed and adjusted in a procedure described in detail in the customer maintenance manual that comes with the ROBOFIL machine in the sections entitled "Défaut circuit fil [Wire circuit fault]" "Contrôle/échange du couteau et de la fraise du hacheur [Checking/changing the cutter of the chopping system]" etc., where the various critical parts of this device are introduced, including, in particular, the part 520, which underlies the present invention.

Following prolonged use of this type of device, experience has shown that the spent, and therefore rough, wire may remain stuck to one or other of the rollers 39, 40, may not reach the cone 531 and may escape via the gaps between the cheeks 525 and the rollers 39, 40. Such incidents cause wire to jam in the mechanisms of the lower head 25 and may lead to damage to and prolonged down-time of the plant.

Numerous tests have made it possible to conclude that the accidental phenomenon of the wire sticking to the rollers could be remedied by enhancing the flow of liquid in the direction opposite to the direction of rotation of the rollers in the gaps between the cheeks 525 and the rollers 39, 40. This conclusion would at first seem to be a paradox because the machine operator, in order to solve the problem, would obviously first of all have the idea of moving the piece 520 closer and closer to the rollers 39, 40, until they rub, thus blocking off the lateral flow.

The object of the present invention is to overcome the aforesaid disadvantages by improving the piece 520, as described in Claim 1, with means making it possible to increase the flow of liquid in the opposite direction to the direction of rotation of the rollers so as to detach the wire from the periphery of the rollers 39, 40. To this end, as described in Claim 2, the invention is characterized in that the new piece 520 has two lateral clearances in place of the two cheeks 525.

A preferred embodiment is explained with the aid of the figures.
Figure 1a shows the initial piece comprising the defects and that underlies the invention.
Figure 1b shows the improved piece intended to replace the previous one and that is the subject of the invention.
Figure 2 shows the surroundings of the lower machining head of a wire electrical discharge machine.
Figure 3 more precisely shows the device for recovering and cutting the spent wire with the removal of the small segments of wire.

According to Figure 1b, in comparison with Figure 1a, the cheeks 525 have been omitted and replaced by two clearances 526 which leave a free passage for a flow of liquid in the opposite direction to the direction of rotation of the rollers 39, 40 thus making it possible, as necessary, to detach the wire from the surface of the said rollers. Two shoulders 527 have been maintained, allowing this new piece to be adjusted with respect to its support 73, so as to space it optimally from the rollers 39, 40. What is more, having omitted the cheeks 525, the risk of rubbing against the rollers is considerably lessened. As a result, it becomes possible to lengthen the nose 524 which is able to adopt a more pointed shape 528, thus making it possible to get even closer to the generatrix of contact between the two rollers, eliminating the risk of the spent wire escaping.

This new piece can therefore, by virtue of the aforementioned improvements, be set closer to the rollers, and this then requires the lengthening of the small-diameter cylindrical part, 521 in Figure 1a, 529 in Figure 1b, which acts as a pivot for the counter-cutter piece 60 so as to prevent the latter from no longer being guided correctly in its rotation.

Of course the embodiment described hereinabove, of a new funnel piece serving to route the spent wire and intended to replace the original piece 520, is not in any way limiting and can be adapted while at the same time respecting the dimensions of the other original pieces that make up the device for recovering and cutting the spent wire and which are depicted in Figures 2 and 3. The clearances 526 may, for example, be cut more deeply at the risk of weakening the walls of the nose 528. The shoulders 527 may be made smaller or even omitted at the risk of making this new piece more difficult to adjust.

## Claims

1. Funnel-piece serving to route the spent wire (20), intended to replace a piece (520) made up of two cylindrical elements (521, 522) 3 mm and 15 mm long respectively, with respective diameters of 2 and 4 mm, and of a whistle-shaped element (523), the latter comprising a pointed nose (524) associated with two cheeks (525) and two concave rounded portions of radius 20 mm, which is installed downstream of and between the two spent-wire drive rollers (39, 40) in wire electrical discharge machines that employ a device for recovering and cutting the spent wire (30) which chops the wire into small segments after it has passed through the machining zone, **characterized in that** this piece comprises means for accentuating a flow of liquid in the opposite direction to the direction of rotation of the rollers (39, 40) so as to detach the wire when the latter becomes stuck to one or other of the rollers.

2. Funnel-piece serving to route the spent wire, according to Claim 1, **characterized in that** the said means consist in improving the original piece (520) by making two lateral clearances (526) in place of the two cheeks (525), thus forming a passage allowing a flow of liquid to flow in the opposite direction to the direction of rotation of the rollers (39, 40).

3. Funnel-piece serving to route the spent wire, according to Claims 1 and 2, **characterized in that** two shoulders (527) are provided allowing this new piece intended to replace the original piece (520) to be adjusted relative to its support (73) so as to space it optimally from the rollers (39, 40).

4. Funnel-piece serving to route the spent wire, according to Claims 1 and 2, **characterized by** a lengthening of the nose (528) by comparison with that (524) of the original piece (520), this new more pointed nose (528) being able to get even closer to the generatrix of contact between the two rollers (39, 40).

5. Funnel-piece serving to route the spent wire, according to Claims 1 and 2, **characterized in that** the small-diameter cylindrical part (529) is longer than the same part (521) in the original piece (520) so as to correctly guide the counter-cutter piece (60) in its rotation.
